Europäisches Patentamt

European Patent Office

Office européen des brevets

(11) Numéro de publication: **0 420 730 A1**

# (12) DEMANDE DE BREVET EUROPEEN

(21) Numéro de dépôt: 90402618.4

(22) Date de dépôt: 21.09.90

(51) Int. Cl.⁵: **B60R 16/06, H05F 3/04**

(30) Priorité: 25.09.89 FR 8912523

(43) Date de publication de la demande:
03.04.91 Bulletin 91/14

(84) Etats contractants désignés:
AT BE CH DE DK ES GB GR IT LI LU NL SE

(71) Demandeur: Lewiner, Jacques
5, rue Bory d'Arnex
F-92210 Saint-Cloud(FR)

Demandeur: Hennion, Claude
14, rue de la Glacière
F-75013 Paris(FR)

Demandeur: Smycz, Eugeniusz
9 A2 rue Gounod
F-92210 Saint-Cloud(FR)

(72) Inventeur: Lewiner, Jacques
5, rue Bory d'Arnex
F-92210 Saint-Cloud(FR)
Inventeur: Hennion, Claude
14, rue de la Glacière
F-75013 Paris(FR)
Inventeur: Smycz, Eugeniusz
9 A2 rue Gounod
F-92210 Saint-Cloud(FR)

(74) Mandataire: Behaghel, Pierre et al
CABINET PLASSERAUD 84 rue d'Amsterdam
F-75009 Paris(FR)

(54) Perfectionnements aux dispositifs pour mettre à la terre des caisses de véhicules ou analogues.

(57) Le dispositif comprend des moyens pour créer automatiquement aux instants désirés entre la caisse (1) et la terre (3) des ions qui, sous l'effet du champ électrique régnant éventuellement entre la caisse et la terre, sont entraînés vers la caisse ou vers la terre selon leur polarité et égalisent ainsi les potentiels de la caisse et de la terre.

## FIG.1.

## PERFECTIONNEMENTS AUX DISPOSITIFS POUR METTRE À LA TERRE DES CAISSES DE VÉHICULES OU ANALOGUES.

L'invention est relative aux dispositifs pour mettre à la terre des caisses métalliques de véhicules ou ensembles analogues, c'est-à-dire d'une façon générale des conteneurs métalliques qui n'ont pas vocation à demeurer fixés définitivement en un endroit donné, mais au contraire doivent se prêter à des déplacements.

Elle concerne plus particulièrement le cas où lesdits conteneurs ou caisses -désignés pour simplifier par le mot "caisses" dans ce qui suit- renferment des matériels sensibles susceptibles d'être détériorés par suite d'une mise à la terre défectueuse, en raison notamment de l'existence d'une différence de potentiel statique entre leurs points de masse et le potentiel de la terre, existence qui peut se traduire par la production incontrôlée d'étincelles de décharges électrostatiques, ou encore en raison de l'emmagasinage instantané d'une puissance électrique excessive engendrée par une impulsion électromagnétique de grande puissance telle que celles accompagnant la foudre ou certaines explosions.

De tels matériels sensibles sont par exemple les circuits électroniques destinés aux communications radio-électriques, aux détections par radar, aux mesures sismiques, certains explosifs, etc.

Pour mettre à la terre les caisses considérées, il est usuel de planter un piquet métallique dans la terre à proximité de la caisse et de relier ce piquet à ladite caisse par un câble conducteur de l'électricité.

Cette formule suppose que la caisse est à l'arrêt au moins pour un certain temps et que son environnement est accessible pour le personnel chargé de planter le piquet.

Elle n'est donc pas envisageable si la caisse, même immobilisée provisoirement, se trouve dans un environnement hostile.

Pour remédier à cet inconvénient, et donc rendre possible une mise à la terre de la caisse sans sortie de personnel, il a déjà été proposé de faire descendre à partir de cette caisse un vérin porteur d'un pied métallique venant en contact avec la terre.

Une telle formule peut donner satisfaction dans certains cas.

Mais elle suppose encore que la caisse soit à l'arrêt et que le pied métallique puisse être déposé directement sur la terre conductrice ou sur un élément susceptible d'établir une liaison conductrice avec la terre : ce n'est pas le cas si le pied est déposé sur un élément isolant de l'électricité tel qu'un rocher.

L'invention a pour but, surtout, de supprimer l'ensemble des inconvénients des formules indiquées ci-dessus en rendant possible une mise à la terre de la caisse même si, à l'arrêt, elle est disposée au-dessus d'un ensemble de blocs isolants tels que des rochers, et même au cours de ses déplacements.

A cet effet, les dispositifs de mise à la terre du genre en question selon l'invention sont essentiellement caractérisés en ce qu'ils sont agencés de façon à créer une liaison conductrice immatérielle entre la caisse à mettre à la terre et la terre elle-même.

Plus précisément, ces dispositifs comprennent des moyens pour créer automatiquement aux instants désirés entre la caisse et la terre des ions qui, sous l'effet du champ électrique régnant éventuellement entre la caisse et la terre, sont entraînés vers la caisse ou vers la terre selon leur polarité et égalisent ainsi les potentiels de la caisse et de la terre.

Dans le présent texte, on désigne pour le mot "ions" des particules chargées électriquement aussi bien positivement que négativement, ces particules pouvant être des ions preprement dits, positifs ou négatifs, ou des électrons.

Dans des modes de réalisations préférés, on a recours en outre à l'une et/ou à l'autre des dispositions suivantes :
- les moyens générateurs d'ions comprennent un circuit électrique propre à engendrer une haute tension et un éclateur disposé à la base de la caisse, composé de deux électrodes alimentées par ladite haute tension,
- la haute tension ci-dessus eset comprise entre 10 et 50 kV,
- les moyens générateurs d'ions comprennent une cartouche explosive disposée à la base de la caisse et des moyens pour faire exploser cette cartouche,
- des moyens sont prévus pour activer automatiquement les moyens générateurs d'ions pendant une période prédéterminée à compter du dépassement d'un seuil prédéterminée par un paramètre directement concerné par la mise à la terre à effectuer, lesdits moyens d'activation comprenant un détecteur des variations dudit paramètre, un comparateur dans lequel est affichée la valeur du seuil et recevant la sortie du détecteur, et éventuellement un circuit monostable activé par la sortie du comparateur,
- le paramètre ci-dessus est la différence de potentiel statique créée entre la caisse et la terre ou, ce qui revient au même, le champ électrostatique créé entre ces deux ensembles,

- le paramètres ci-dessus est l'intensité d'une onde électromagnétique de haute fréquence,
- les moyens générateurs d'ions comprennent une source de rayonnement radioactif permanente disposée à la base de la caisse,
- l'activité de la source radioactive est comprise entre 50 μCuries et 25 millicuries,
- les moyens générateurs d'ions comprennent une pièce conductrice acérée ou pointue faisant saillie à partir de la caisse.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant au dessin ci-annexé d'une manière bien entendu non limitative.

La figure 1, de ce dessin, montre très schématiquement une caisse métallique posée sur le sol et équipée d'un dispositif de mise à la terre conforme à l'invention.

La figure 2 montre schématiquement le contenu d'un tel dispositif.

La figure 3 montre schématiquement une variante dudit dispositif conforme à l'invention.

La figure 4 montre schématiquement un mode de réalisation selon l'invention de l'un des composants d'un dispositif du genre ci-dessus.

On dispose d'une caisse ou carrosserie métallique 1 contenant des objets ou ensembles 2 du genre de ceux définis ci-dessus, susceptibles d'être déréglés ou détériorés par une mise à la terre défectueuse, et on se propose de mettre à la terre ladite caisse 1 même si elle est en mouvement, ou si, comme illustré, elle est posée sur la terre conductrice 3 par l'intermédiaire de blocs isolants de l'électricité tels que des rochers 4.

A cet effet l'on a recours à une source d'ions 5 disposée à la base de la caisse et propre à émettre des ions dans le champ électrique engendré par la différence de potentiel existant éventuellement entre la caisse et la terre, cette émission étant prévue de façon telle que lesdits ions soient entraînés par ledit champ dans un sens ou dans l'autre selon leur polarité et créent ainsi un courant d'ions 6, courant capable de se frayer lui-même un chemin entre les rochers 4 depuis la base de la caisse 1 jusqu'à la terre conductrice 3 : ainsi les charges électrostatiques indésirables présentes sur la caisse sont automatiquement compensés par ledit courant ionique 6.

Les ions peuvent être engendrés en permanence à partir d'une source radioactive (non représentée).

Dans ce cas, le support de ladite source est agencé de façon telle que les ions engendrés par elle se trouvent placés dans une zone comprise entre la caisse et la terre où est susceptible d'apparaître un fort champ électrique lorsque le potentiel de la masse de la caisse et celui de la terre ne sont pas égaux, le déplacement desdits ions dans ledit champ, dû à l'existence même de ce champ, ayant pour effet de neutraliser les charges électriques portées par la masse de la caisse.

Une telle source est avantageusement choisie parmi celles susceptibles d'engendrer des rayonnements α (Americium 241) ou β (Césium) et dont l'activité est comprise entre 50 μCuries et 25 millicuries.

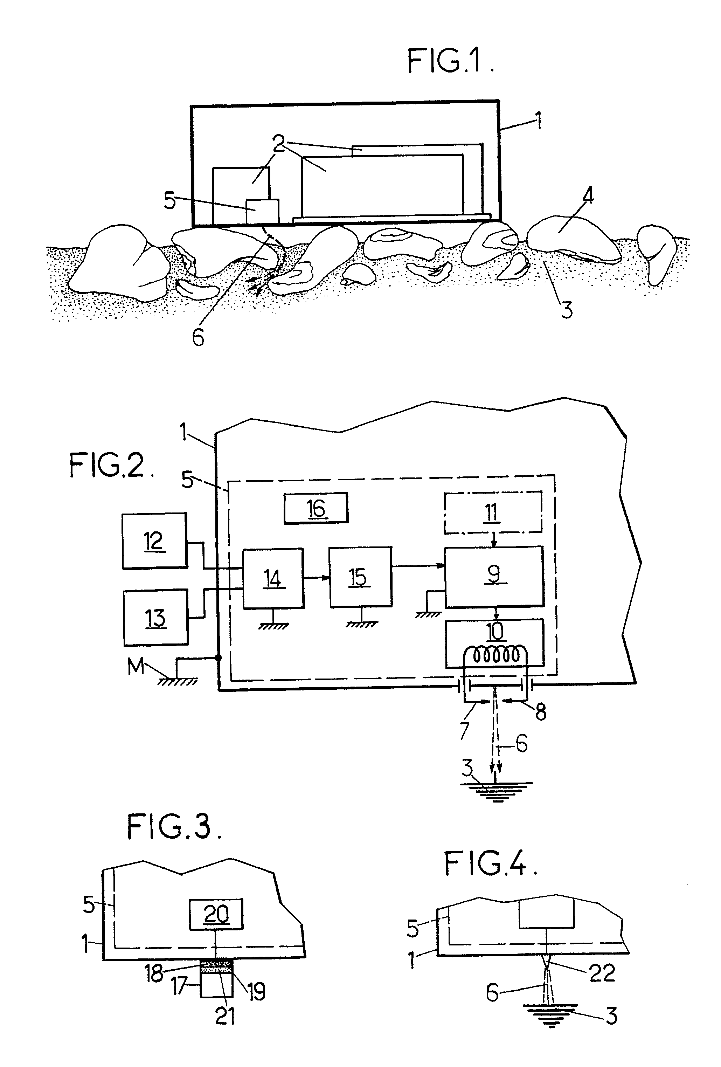

Selon d'autres modes de réalisation qui sont illustrés sur la figure 2, les ions 6 sont créés en permanence ou à certains instants seulement, en appliquant sur les électrodes de décharge 7,8 d'un éclateur une haute tension U qui peut se présenter sous la forme d'une suite d'impulsions, la fréquence de répétition de ces impulsions pouvant être élevée et par exemple de l'ordre de 10 kHz à 1 MHz.

Cette tension U est engendrée par un oscillateur 9 relié à l'éclateur 7,8 par l'intermédiaire d'un transformateur élévateur 10.

La valeur de ladite tension U est de préférence comprise entre 10 et 50 kV.

L'oscillateur 9 peut être activé en permanence à partir d'une source électrique appropriée visible en traits mixtes en 11.

Selon un mode de réalisation préféré, plus économe en énergie, cette activité est engendrée automatiquement et seulement en cas de besoin.

A cet effet l'on prévoit :
- des moyens 12,13 pour détecter les variations de l'un des paramètres représentatifs d'une mise à la terre défectueuse ou dont la manifestation exige une mise à la terre immédiate,
- un comparateur 14 pour détecter le franchissement d'un seuil prédéterminé par un tel paramètre,
- et un circuit monostable 15 pour activer automatiquement l'oscillateur 9 pendant une durée T prédéterminée, qui est avantageusement de l'ordre de la seconde, après franchissement d'un tel seuil.

Le paramètre en question est par exemple la différence de potentiel statique V créée entre la masse de la caisse 1 et la terre 3 ou, ce qui revient au même, le champ électrostatique H qui règne entre ces deux ensembles.

Le détecteur schématisé par le rectangle 12 sur la figure 2 est alors prévu pour détecter un tel champ H.

Le comparateur 14 est alors agencé de façon à déclencher le circuit monstable 15 dès que le champ détecté H dépasse une valeur prédéterminée, par exemple de l'ordre de 200 V/cm.

Le paramètre détecté peut être également l'intensité d'une onde électromagnétique de forte puissance et de fréquence élevée inopinément appliquée sur la caisse 1 en provenance par exemple de la foudre ou d'une forte explosion.

La forte impulsion de tension électrique résultant de cette onde pourrait provoquer de graves dommages sur les matériels 6 si l'énergie correspondante ne pouvait être immédiatement évacuée vers la terre.

Le circuit schématisé par le rectangle 13 sur la figure 2 est agencé de façon à détecter l'intensité d'une telle onde et le comparateur 14, de façon à déclencher instantanément l'émission du courant ionique 6 capable d'évacuer vers la terre l'énergie correspondante dès qu'elle dépasse un seuil critique.

A cet égard il pourra être précieux de mettre à profit les enseignements de la demande de brevet France n° 87 16985 qui a été déposée aux noms des demandeurs et selon laquelle, par temps d'orage, un courant ionique de décharge est automatiquement engendré dans l'espace par un éclateur très peu de temps avant l'application de la foudre sur cet appareil, l'émission dudit courant ionique étant déclenchée par l'onde électromagnétique qui accompagne la déflagration donnant naissance à la foudre et qui parvient au niveau dudit appareil juste avant la foudre elle-même.

Le rectangle 16 de la figure 2 schématise la source de courant électrique continu, généralement constituée par une pile ou batterie, qui alimente le dispositif.

Mais on peut s'affranchir du besoin d'une telle source : à cet effet l'énergie électrique captée par le détecteur 12 de champ électrique ou par le détecteur 13 d'impulsions électromagnétiques peut être directement utilisée, après redressement et stockage dans un condensateur, pour alimenter le circuit comparateur 14.

Bien entendu, les "masses" utilisées pour l'ensemble des appareils ou circuits 9 à 16 ci-dessus -et dont certains ont été symbolisées de la façon habituelle- sont constituées par la masse M de la caisse métallique 1, masse éventuellement connectée électriquement à l'une des électrodes de l'éclateur 7,8.

Au lieu d'être engendrée par une électronique élévatrice de tension elle-même servie par un oscillateur, la haute tension électrique appliquée sur les électrodes 7,8 de l'éclateur ci-dessus pourrait être engendrée par d'autres moyens tels que par exemple un dispositif piézo-électrique exploitant l'excitation mécanique d'une céramique.

Pour écarter tout risque d'inflammation de produits explosifs éventuellement contenus dans la caisse métallique 1 à mettre à la terre, le générateur d'ions peut être entouré d'un écran protecteur et associé à un dispositif de soufflage propre à chasser vers le bas les ions produits.

Un tel soufflage pourrait être obtenu de manière très brusque en provoquant l'explosion d'une capsule explosive, à proximité du générateur d'ions.

Dans une variante schématisée sur la figure 3, le générateur d'ions est constitué par un tube isolant 17 présentant un fond conducteur 18 en liaison électrique avec la masse électrique de la caisse 1. Ce tube est ouvert vers le bas ou comprend un couvercle inférieur facile à casser ou à dégager. Un détonateur 19 placé contre le fond 18 et commandé par un dispositif 20 permet de provoquer l'explosion d'un élément explosif 21 placé dans le tube 17.

Lorsque le dispositif 20 est déclenché, l'explosion produite dans le tube provoque le création d'un plasma ionisé qui est chassé à grande vitesse vers la terre. Ce jet de plasma établit la liaison électrique désirée entre la masse de la caisse 1 et la terre 3.

Le dispositif 20 peut être constitué par les moyens 12 à 14 décrits plus haut.

Dans tous les cas, comme indiqué sur la figure 4, et afin de renforcer le champ électrique dans lequel se trouvent créés les ions, il est intéressant de faire comprendre au générateur d'ions une pièce conductrice acérée ou pointue 22 faisant saillie à partir de la caisse 1, de préférence vers le bas et généralement sous cette caisse, de façon à assurer une concentration des lignes de champ dans la région proche de cette pièce et à accélérer ainsi le déplacement des ions dans le champ électrique entre la caisse et la terre.

En suite de quoi et quel que soit le mode de réalisation adopté, on obtient finalement un dispositif de mise à la terre pour caisse métallique dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Dispositif pour mettre à la terre une caisse métallique de véhicule ou analogue, caractérisé en ce qu'il comprend des moyens pour créer automatiquement aux instants désirés entre la caisse (1) et la terre (3) des ions qui, sous l'effet du champ électrique régnant éventuellement entre la caisse et la terre, sont entraînés vers la caisse ou vers la terre selon leur polarité et égalisent ainsi les potentiels de la caisse et de la terre.

2. Dispositif selon la revendication 1, caractérisé en ce que les moyens générateurs d'ions comprennent un circuit électrique (9,10) propre à engendrer une haute tension et un éclateur disposé à la base de la caisse, composé de deux électrodes (7,8) alimentées par ladite haute tension.

3. Dispositif selon la revendication 2, caractérisé en ce que la haute tension est comprise entre 10 et 50 kV.

4. Dispositif selon la revendication 1, caractérisé en ce que les moyens générateurs d'ions comprennent une cartouche explosive (21) disposée à la base de la caisse et des moyens (18-20) pour faire exploser cette cartouche.

5. Dispositif selon l'une quelconque des précédentes revendications, caractérisé en ce que des moyens sont prévus pour activer automatiquement les moyens générateurs d'ions pendant une période prédéterminée à compter du dépassement d'un seuil prédéterminé par un paramètre directement concerné par la mise à la terre à effectuer, lesdits moyens comprenant un détecteur (12, 13) des variations dudit paramètre, un comparateur (14) dans lequel est affichée la valeur du seuil et recevant la sortie du détecteur, et éventuellement un circuit monostable (15) activé par la sortie du comparateur.

6. Dispositif selon la revendication 5, caractérisé en ce que le paramètre est la différence de potentiel statique créée entre la caisse (1) et la terre (3) ou, ce qui revient au même, le champ électrostatique créé entre ces deux ensembles.

7. Dispositif selon la revendications 5, caractérisé en ce que le paramètre est l'intensité d'une onde électromagnétique de haute fréquence.

8. Dispositif selon la revendication 1, caractérisé en ce que les moyens générateurs d'ions comprennent une source de rayonnement radioactif permanente disposée à la base de la caisse.

9. Dispositif selon la revendication 8, caractérisé en ce que l'activité de la source radioactive est comprise entre 50 $\mu$Curies et 25 millicuries.

10. Dispositif selon l'une quelconque des précédentes revendications, caractérisé en ce que les moyens générateurs d'ions comprennent une pièce conductrice acérée ou pointue (22) faisant saillie à partir de la caisse.

EP 0 420 730 A1

FIG.1.

FIG.2.

FIG.3.

FIG.4.

6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 624 319   (LEWINER E.A.)<br>* le document en entier *<br>— — — | 1-3,5-8, 10 | B 60 R 16/06<br>H 05 F 3/04 |
| A | US-A-3 733 038   (IKRATH ET AL)<br>* le document en entier *<br>— — — | 1,4 | |
| A | US-A-3 297 281   (FELICI)<br>* le document en entier *<br>— — — | 1,6,10 | |
| A | GB-A-6 466 79   (FIRESTONE)<br>— — — | | |
| A | PATENT ABSTRACTS OF JAPAN vol. 6, no. 34 (P-104)(912) 02 mars 82,<br>& JP-A-56 152019 (TOSHITAKA TAKEI) 25 novembre 81,<br>* le document en entier *<br>— — — | | |
| A | GB-A-2 057 372   (SAKAE TAKAHASHI)<br>— — — — — | | |

|  |
|---|
| **DOMAINES TECHNIQUES RECHERCHES (Int. Cl.5)** |
| B 60 R<br>B 65 D<br>B 64 D<br>H 05 F |

Le présent rapport de recherche a été établi pour toutes les revendications

| Lieu de la recherche | Date d'achèvement de la recherche | Examinateur |
|---|---|---|
| La Haye | 20 décembre 90 | VERLEYE J. |